# FASCICULE DE BREVET EUROPEEN

(11) **EP 1 019 864 B1**
(45) Date de publication et mention de la délivrance du brevet: **16.01.2002**
(21) Numéro de dépôt: 98914917.4
(22) Date de dépôt: 13.03.1998
(51) Int. Cl.: G06K 7/00

(54) **CONNECTEUR POUR LECTEUR DE CARTE, A CONTACTS BALAIS ELASTIQUES, ET LECTEUR COMPORTANT UN TEL CONNECTEUR**
KARTENLESERVERBINDUNG MIT ELEKTRISCHEN BÜRSTENKONTAKTEN UND DAMIT AUSGERÜSTETER LESER
CARD READER CONNECTOR, WITH ELASTIC BRUSH CONTACTS, AND READER COMPRISING SAME

(30) Priorité: 17.03.1997 FR 9703196; 17.03.1997 FR 9703197
(43) Date de publication de la demande: 19.07.2000
(73) Titulaire: FRAMATOME CONNECTORS INTERNATIONAL S.A., 92400 Courbevoie (FR)
(72) Inventeur: ODIC, Emmanuel, F-25300 Pontarlier (FR)
(74) Mandataire: Somnier, Jean-Louis
(86) Numéro de dépôt international: FR9800517
(87) Numéro de publication internationale: WO9841946

(56) Documents cités:
- WO-A-95/33243
- WO-A-96/02892
- DE-A- 4 330 017

## Description

La présente invention concerne un connecteur de carte à microcircuit (ou puce) pour un lecteur de carte notamment une carte de poche du type porte-monnaie électronique.

Un tel lecteur de carte de poche doit être de faible coût pour pouvoir être commercialisé à grande échelle et doit permettre à l'utilisateur de vérifier facilement la somme qui est disponible sur sa carte "porte-monnaie".

Dans un tel lecteur se pose le problème de pouvoir relier les plages de contact du microcircuit porté par la carte au circuit électronique du lecteur.

Selon les brevets FR 87 15 739 et FR 95 06 854, on utilise à cet effet des connecteurs comprenant des contacts balais solidaires d'un cadre en matière électriquement isolante.

Le DE-A-43 30 017 (voir mode de réalisation (k) de la figure 4 de ce document) montre un connecteur pour lecteur de carte à microcircuit comprenant :
- a) des contacts reliés à un circuit électronique et destinés, lors de la mise en place de la carte dans le lecteur, à être reliés à des plages de contact du microcircuit de cette carte,
- b) une plaquette en matière électriquement isolante comportant des alvéoles recevant chacune librement un contact balai dont une extrémité fait saillie hors de l'alvéole et est destinée à être mise en contact avec une plage de contact du microcircuit de la carte et dont l'autre extrémité prend appui avec glissement sur une plage conductrice du circuit électronique formé sur une carte de circuit imprimé appliquée contre la plaquette en matière électriquement isolante. Le document sert de base au préambule de la revendication 1.

Le WO-A-96 02 892 porte sur un connecteur pour lecteur de carte à microcircuit comprenant :
- a) des contacts reliés à un circuit électronique et destinés, lors de la mise en place de la carte dans le lecteur, à être reliés à des plages de contact du microcircuit de cette carte,
- b) une plaquette en matière électriquement isolante comportant des alvéoles recevant chacune un contact balai dont une extrémité fait saillie hors de l'alvéole et est destinée à être mise en contact avec une plage de contact du microcircuit de la carte et dont l'autre extrémité est en contact avec une plage conductrice du circuit électronique formé sur une carte de circuit imprimé appliquée contre la plaquette en matière électriquement isolante.

L'extrémité du contact balai est destinée à être brasée sur une plaque du circuit imprimé.

Le WO-A-95 33 243 montre un connecteur pour lecteur de carte à microcircuit comprenant :
a) des contacts reliés à un circuit électronique et destinés, lors de la mise en place de la carte dans le lecteur, à être reliés à des plages de contact du microcircuit de cette carte,
b) une plaquette en matière électriquement isolante comportant des alvéoles recevant chacune librement un contact balai dont une extrémité fait saillie hors de l'alvéole et est destinée à être mise en contact avec une plage de contact du microcircuit de la carte et dont l'autre extrémité est en contact avec une plage conductrice du circuit électronique formé sur une carte de circuit imprimé appliquée contre la plaquette en matière électriquement isolante.

L'autre extrémité du contact balai est destinée à être maintenue élastiquement en appui contre des zones conductrices du circuit imprimé.

Le but de la présente invention est de diminuer le coût d'un connecteur du genre ci-dessus en supprimant toute opération de soudage pour relier les plages de contact du microcircuit de la carte aux plages de contact du circuit électronique du lecteur.

L'invention vise ainsi un connecteur pour lecteur de carte à microcircuit comprenant des contacts reliés à un circuit électronique et destinés, lors de la mise en place de la carte dans le lecteur, à être reliés à des plages de contact du microcircuit de cette carte, ce connecteur comprenant une plaquette en matière électriquement isolante comportant des alvéoles recevant. chacune librement un contact balai dont une extrémité fait saillie hors de l'alvéole et est destinée à être mise en contact avec une plage de contact du microcircuit de la carte et dont l'autre extrémité prend appui avec glissement sur une plage conductrice du circuit électronique formé sur une carte du circuit imprimé appliquée contre la plaquette en matière électriquement isolante.

Suivant l'invention, ce connecteur est caractérisé en ce que les contacts balais ont la forme d'une lame métallique pliée sensiblement en forme de V, dont le sommet constitue ladite première extrémité et dont au moins l'un des pieds constitue ladite seconde extrémité.

Les contacts balais sont ainsi simplement logés dans des alvéoles d'une plaquette isolante, dans lesquelles ils sont retenus par la carte du circuit imprimé qui porte le circuit électronique. Ces contacts balais sont engagés librement dans ces alvéoles et aucune soudure n'est nécessaire.

Lorsque la carte est mise en place dans le lecteur, les plages de contact du microcircuit de cette carte viennent en contact avec les extrémités en saillie des contacts balais et les autres extrémités de ceux-ci viennent en contact avec les plages de contact de la carte de circuit imprimé.

De préférence, les contacts balais sont engagés dans des alvéoles dont la section présente dans le plan du V des contacts balais une forme évasée sensiblement complémentaire à celle du V des contacts balais.

De préférence également les contacts balais sont en un métal ayant des propriétés élastiques.

Ainsi lorsque la carte est introduite dans le lecteur, cette carte prend appui sur les sommets en saillie des contacts en V, enfonce ces sommets dans les alvéoles, ce qui produit une déformation élastique du V des contacts et un glissement des pieds de ceux-ci sur les plages de contact du circuit imprimé.

Cette disposition permet d'établir une excellente connexion électrique entre les plages de matière électriquement isolante comportant des alvéoles 4 recevant chacune librement un contact balai 12.

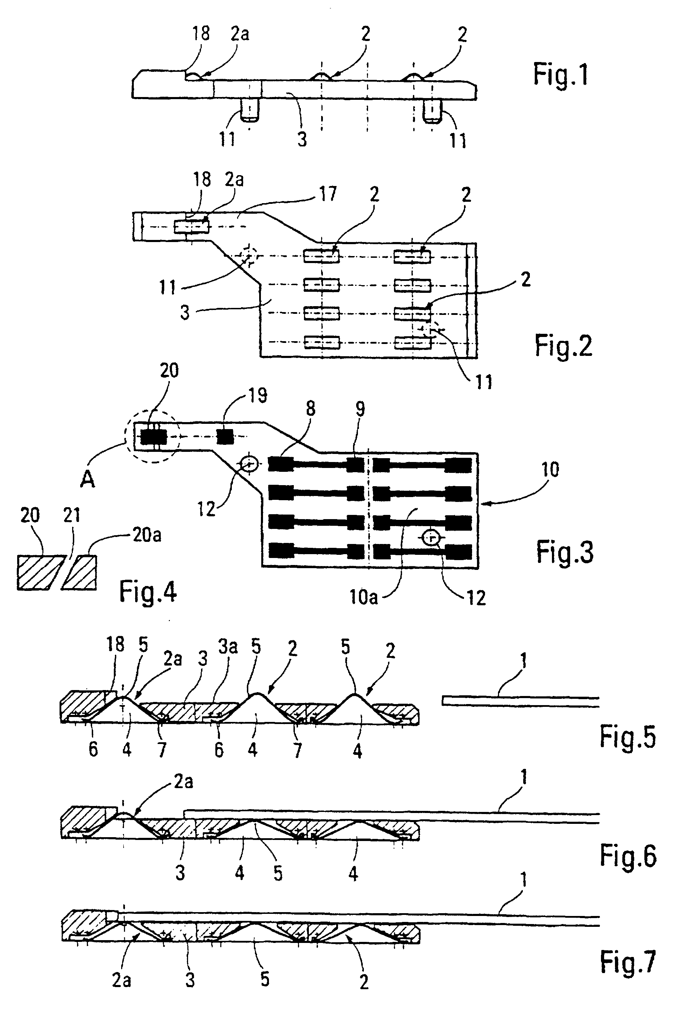

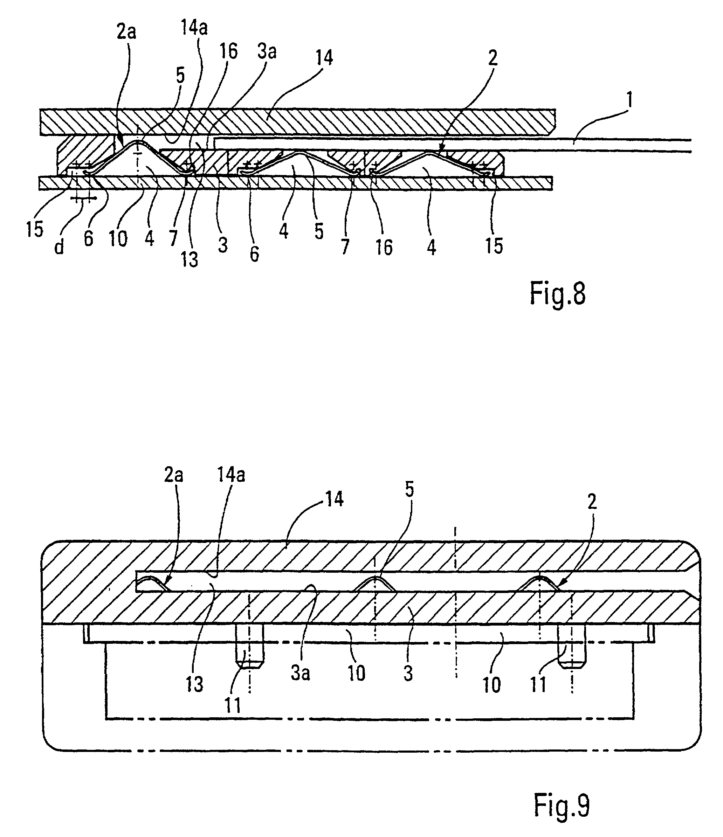

Une première extrémité 5 de ces contacts balais 2 fait saillie hors de l'alvéole 4 et est destinée à être mise en contact avec une plage de contact du microcircuit de la carte 1 (voir figures 6 et 7). L'autre extrémité 6, 7 prend appui sur une plage conductrice 8, 9 du circuit électronique 3 formé sur une carte 10 du circuit imprimé appliquée contre la plaquette 3 en matière électriquement isolante.

Dans l'exemple représenté, la plaquette 3 porte des tenons 11 coopérant avec des trous de fixation 12 de la carte 10 de circuit imprimé.

Comme montré par les figures 5 à 9, les contacts balais 2 ont la forme d'une lame métallique pliée sensiblement en forme de V, dont le sommet 5 constitue la première extrémité, faisant saillie hors des alvéoles 4, et dont au moins l'un des pieds 6, 7 prend appui sur une plage conductrice 8, 9 du circuit électronique 10a.

Les contacts balais 2 sont engagés dans les alvéoles 4 dont la section présente dans le plan du V des contacts balais 2 une forme évasée sensiblement complémentaire à celle du V des contacts balais 2.

Les contacts balais 2 sont en un métal conducteur ayant des propriétés élastiques.

De plus, le plan du V des contacts balais 2 est parallèle à la direction d'introduction de la carte 1 dans le lecteur.

Comme montré par les figures 8 et 9, la première extrémité 5 des contacts balais 2 fait saillie dans une fente 13 délimitée par la face 3a de la plaquette 3 et la face 14a d'un guide-carte 14.

Dans l'exemple de la figure 8, le guide-carte 14 est fixé à la plaquette 3.

Dans l'exemple de la figure 9, le guide-carte 14 est réalisé d'une seule pièce avec la plaquette 3.

On voit également sur la figure 8, que les pieds du V des contacts balais 2 ont une forme recourbée vers la plaquette 3. Ces pieds 6, 7 sont engagés dans des logements 15, 16 de la plaquette 3 ménagés entre celle-ci et la carte de circuit imprimé 10.

L'un 15 de ces logements 15, 16 a une dimension telle que le pied 6 correspondant peut se déplacer suivant une distance d sur la plage de contact 8 ou 9 du circuit imprimé 10a du fait de la déformation du contact balai 2 provoquée par l'introduction de la carte 1.

L'autre pied 7 du contact balai 2 est bloqué dans le logement correspondant 16, de sorte qu'il ne bouge pas lors de l'introduction de la carte 1.

On va maintenant expliquer le fonctionnement du connecteur que l'on vient de décrire.

Avant introduction de la carte 1 dans le lecteur, le sommet 5 des contacts balais 2 fait saillie hors des alvéoles 4 sur la surface 3a de la plaquette isolante 3.

Lors de la mise en place de la carte 1, les sommets 5 des contacts 2 s'enfoncent successivement dans les alvéoles 4.

Cet enfoncement, provoque une déformation élastique des contacts balais 2, de sorte que l'un des pieds 6 se déplace suivant une distance d dans son logement 15.

Ce déplacement des pieds 6 des contacts 2 amène ceux-ci en contact avec appui élastique sur les plages de contact telles que 8, 9 du circuit électronique porté par la carte 10 de circuit imprimé.

Lorsque la carte 1 à microcircuit est complètement engagée sur la plaquette 3, comme indiqué sur la figure 7, les plages de contact du microcircuit de cette carte sont en contact avec les sommets 5 des contacts balais 2. Ces contacts balais 2 permettent ainsi de connecter électriquement le microcircuit de la carte 1 avec le circuit électronique porté par la carte de circuit imprimé 10.

Dans l'exemple représenté sur les figures, le connecteur selon l'invention comprend également un contact 2a pour détecter la fin de course d'introduction de la carte dans le lecteur.

Ce contact 2a est identique aux autres contacts et est engagé dans une alvéole 4 réalisée dans la plaquette isolante 3 identique aux autres alvéoles.

Ce contact 2a est situé sur une branche 17 de la plaquette 3 qui est désaxée par rapport à l'axe longitudinal de celle-ci.

Le sommet 5 de ce contact 2a fait saillie sur la surface 3a de la plaquette 3 près d'un épaulement 18 constituant une butée de fin de course de la carte 1.

On voit sur la figure 7 que lorsque la carte 1 à microcircuit est en position de fin de course sur la plaquette 3, la carte 1 prend appui sur le sommet 5 du contact balai 2a, et les pieds 6, 7 de celui-ci prennent appui (voir figure 3) sur deux plages conductrices 19, 20 du circuit électronique de la carte 10 de circuit imprimé pour fermer un circuit de détection de fin de course de la carte 1.

L'une des plages conductrices est dédoublée (voir figure 4) en une première partie 20a non connectée au circuit de détection de fin de course et une seconde partie 20 qui est connectée à ce circuit.

L'un 7 des pieds du contact balai 2a est bloqué (voir figure 8) dans un logement 16 de la plaquette isolante 3, tandis que le second pied 6 est engagé dans un logement 15 dans lequel il peut, sous l'effet de la déformation du contact balai 2a provoquée par la carte 1 à microcircuit, se déplacer suivant une distance d de la première partie 20a de la plage dédoublée vers la seconde partie 20 de celle-ci.

La figure 4 montre d'autre part que les deux parties 20, 20a de la plage conductrice dédoublée, sont séparées par un intervalle 21 oblique par rapport à la direction de déplacement du second pied 6 du contact balai 2a, ce qui évite que ce pied 6 s'accroche sur une surépaisseur de la seconde plage conductrice 20.

Bien entendu, l'invention n'est pas limitée à l'exemple de réalisation que l'on vient de décrire et on peut apporter à celui-ci de nombreuses modifications sans sortir du cadre de l'invention.

Ainsi, l'invention peut également s'appliquer dans un système où la carte est mise en place par atterrissage au lieu d'être introduite par glissement.

Par ailleurs, la carte 1 pourrait être appliquée sur la face de la plaquette 3 d'où font saillie les contacts 2, au moyen d'un ressort presseur.

## Revendications

1. Connecteur pour lecteur de carte à microcircuit (1) comprenant des contacts (2) reliés à un circuit électronique (10a) et destinés, lors de la mise en place de la carte (1) dans le lecteur, à être reliés à des plages de contact du microcircuit de cette carte, ce connecteur comprenant une plaquette (3) en matière électriquement isolante comportant des alvéoles (4) recevant chacune librement un contact balai (2) dont une extrémité (5) fait saillie hors de l'alvéole (4) et est destinée à être mise en contact avec une plage de contact du microcircuit de la carte (1) et dont l'autre extrémité (6, 7) prend appui avec glissement sur une plage conductrice (8, 9) du circuit électronique formé sur une carte (10) de circuit imprimé appliquée contre la plaquette (3) en matière électriquement isolante, **caractérisé en ce que** les contacts balais (2) ont la forme d'une lame métallique pliée sensiblement en forme de V, dont le sommet (5) constitue ladite première extrémité et dont au moins l'un des pieds (6, 7) constitue ladite seconde extrémité.

2. Connecteur conforme à la revendication 1, **caractérisé en ce que** les contacts balais (2) sont engagés dans des alvéoles (4) dont la section présente dans le plan du V des contacts balais (2) une forme évasée sensiblement complémentaire à celle du V des contacts balais (2).

3. Connecteur conforme à l'une des revendications 1 ou 2, **caractérisé en ce que** les contacts balais (2) sont en un métal ayant des propriétés élastiques.

4. Connecteur conforme à l'une des revendications 1 à 3, **caractérisé en ce que** le plan du V des contacts balais (2) est parallèle à la direction d'introduction de la carte (1) dans le lecteur.

5. Connecteur conforme à l'une des revendications 1 à 4, **caractérisé en ce que** la première extrémité (5) des contacts balais fait saillie dans.une fente (13) délimitée par l'une (3a) des faces de la plaquette (3) et la face (14a) d'un guide-carte (14).

6. Connecteur conforme à la revendication 5, **caractérisé en ce que** le guide-carte (14) est fixé à la plaquette (3).

7. Connecteur conforme à la revendication 5, **caractérisé en ce que** le guide-carte (14) est réalisé d'une seule pièce avec la plaquette (3).

8. Connecteur conforme à l'une des revendications 1 à 7, **caractérisé en ce que** les pieds (6, 7) du V des contacts balais (2) ont une forme recourbée vers la plaquette (3).

9. Connecteur conforme à l'une des revendications 1 à 8, **caractérisé en ce que** les pieds (6, 7) du V sont engagés dans les logements (15, 16) de la plaquette (3) ménagés entre celle-ci et la carte de circuit imprimé (10).

10. Connecteur conforme à la revendication 9 **caractérisé en ce que** l'un au moins de ces logements (15, 16) a une dimension telle que le pied (6) correspondant peut se déplacer sur la plage de contact (8, 9) du circuit imprimé lors de la déformation du contact-balai (2) provoquée par l'introduction de la carte (1).

11. Connecteur conforme à la revendication 10, **caractérisé en ce que** l'un (7) des pieds du contact-balai (2) est bloqué dans le logement (16) correspondant.

12. Connecteur conforme à l'une des revendications 1 à 11, comprenant au moins un contact (2a) pour détecter la fin de course d'introduction de la carte (1) dans le lecteur, ce contact (2a) étant relié à des plages conductrices du circuit électronique, une alvéole (4) recevant librement ce contact balai (2a) dont une première extrémité (5) fait saillie hors de l'alvéole (4) et est destinée à détecter la fin de course de la carte (1) et dont l'autre extrémité (6, 7) prend appui sur une plage conductrice (19 ; 20, 20a) du circuit électronique formé sur la carte (10) de circuit imprimé.

13. Connecteur conforme à la revendication 12, **caractérisé en ce que** lorsque la carte (1) à microcircuit est en position de fin de course sur la plaquette (3), la carte (1) prend appui sur le sommet (5) du contact balai, et les pieds (6, 7) de celui-ci prennent appui sur deux plages conductrices (19, 20) du circuit électronique de la carte (10) de circuit imprimé pour fermer un circuit de détection de fin de course de la carte.

14. Connecteur conforme à la revendication 13, **caractérisé en ce que** l'une desdites plages conductrices est dédoublée en une première partie (20a) non connectée au circuit de détection de fin de course et une seconde partie (20) connectée à ce circuit, **en ce que** l'un (7) des pieds du contact balai (2a) est bloqué par rapport à la plaquette isolante (3), tandis que le second pied (6) peut sous l'effet de la déformation du contact balai (2a) provoquée par la carte (1) à microcircuit, se déplacer de la première partie (20a) de la plage dédoublée vers la seconde partie (20) de celle-ci.

15. Connecteur conforme à la revendication 14, **caractérisé en ce que** les deux parties (20, 20a) de la plage conductrice dédoublée sont séparées par un intervalle (21) oblique par rapport à la direction de déplacement dudit second pied (6) du contact balai.

16. Connecteur conforme à l'une des revendications 12 à 15, **caractérisé en ce que** le contact balai (2a) pour détecter la fin de course de la carte (1) est situé sur une branche (17) de la plaquette (3) désaxée par rapport à l'axe de cette dernière.

17. Lecteur de carte comprenant un connecteur conforme à l'une des revendications 1 à 16.

## Patentansprüche

1. Verbinder für einen Leser einer Chipkarte (1) der Kontakte (2) aufweist, die an eine elektronische Schaltung (10a) angeschlossen sind und die bei der Plazierung der Karte (1) im Leser mit Kontaktflächen der Mikroschaltung der Karte verbunden werden, wobei der Verbinder eine Platte (3) aus elektrisch isolierendem Material aufweist, die Buchsen (4) aufweist, die jeweils frei einen Bürstenkontakt (2) aufnehmen, dessen eines Ende (5) über die Buchse (4) übersteht und in Kontakt mit einer Kontaktfläche der Mikroschaltung der Karte (1) kommt, und dessen anderes Ende (6, 7) gleitend auf einer leitenden Fläche (8, 9) der elektronischen Schaltung liegt, die auf einer Leiterplatte (10) gebildet ist, die an der Platte (3) aus elektrisch isolierendem Material anliegt,
**dadurch gekennzeichnet, daß**
die Bürstenkontakte (2) die Form einer Metallamelle haben, die im wesentlichen V-förmig gebogen sind, deren Spitze (5) das erste Ende darstellt und wobei wenigstens einer der Füße (6, 7) das andere Ende darstellt.

2. Verbinder nach Anspruch 1, **dadurch gekennzeichnet, daß** die Bürstenkontakte (2) in den Buchsen (4) liegen, deren Querschnitt in der Ebene des Vs der Bürstenkontakte (2) eine konisch aufgeweitete Form bildet, die im wesentlichen komplementär zur Form des Vs der Bürstenkontakte (2) ist.

3. Steckverbinder nach einem der Ansprüche 1 oder 2, **dadurch gekennzeichnet, daß** die Bürstenkontakte aus einem Metall sind, das elastische Eigenschaften aufweist.

4. Verbinder nach einem der Ansprüche 1 bis 3, **dadurch gekennzeichnet, daß** die V-förmige Ebene der Bürstenkontakte (2) parallel zur Einführungsrichtung der Karte in den Leser ist.

5. Verbinder nach einem der Ansprüche 1 bis 4, **dadurch gekennzeichnet, daß** das erste Ende der Bürstenkontakte in einen Schlitz (13) vorspringt, der durch eine (3a) der Seiten der Platte (3) und durch die Seite (14a) einer Kartenführung (14) begrenzt ist.

6. Verbinder nach Anspruch 5, **dadurch gekennzeichnet, daß** die Kartenführung (14) an der Platte (3) befestigt ist.

7. Verbinder nach Anspruch 5, **dadurch gekennzeichnet, daß** die Kartenführung (14) einstückig mit der Platte (3) ausgebildet ist.

8. Verbinder nach einem der Ansprüche 1 bis 7, **dadurch gekennzeichnet, daß** die Füße (6, 7) des Vs der Bürstenkontakte (2) in Richtung der Platte (3) zurückgebogen geformt sind.

9. Verbinder nach einem der Ansprüche 1 bis 8, **dadurch gekennzeichnet, daß** die Füße (6, 7) des Vs in Aufnahmen (15, 16) der Platte (3) eingreifen, die zwischen der Platte und der Leiterplatte (10) liegen.

10. Verbinder nach Anspruch 9, **dadurch gekennzeichnet, daß** wenigstens eine der Aufnahmen (15, 16) derart dimensioniert ist, daß der entsprechende Fuß sich auf der Kontaktfläche (8, 9) der gedruckten Schaltung bei der Verbiegung des Bürstenkontaktes bewegen kann, die sich durch die Einführung der Karte (1) ergibt.

11. Verbinder nach Anspruch 10, **dadurch gekennzeichnet, daß** einer der Füße (7) des Bürstenkontaktes (2) in der entsprechenden Aufnahme (16) festsitzt.

12. Verbinder nach einem der Ansprüche 1 bis 11, der wenigstens einen Kontakt (2a) für das Erfassen des Endes des Einführungsweges der Karte (1) im Leser aufweist, wobei dieser Kontakt (2a) mit leitenden Flächen der elektronischen Schaltung verbunden ist, wobei eine Buchse (4) den Bürstenkontakt (2a) frei aufnimmt, dessen erstes Ende (5) über die Buchse (4) übersteht und das Wegende der Karte (1) detektieren soll and dessen anderes Ende (6, 7) auf einer leitenden Fläche (19; 20, 20a) der elektronischen Schaltung aufliegt, die auf der Karte (10) der bedruckten Schaltung gebildet ist.

13. Verbinder nach Anspruch 12, **dadurch gekennzeichnet, daß** während die Chipkarte (1) in ihrer Endposition auf der Platte (3) liegt, die Karte (1) auf der Spitze (5) des Bürstenkontaktes liegt und die Füße (6, 7) dieses Kontaktes auf den zwei leitenden Flächen (19, 20) der elektronischen Schaltung der Karte (10) der gedruckten Schaltung liegen, um den Schaltkreis für das Wegende der Karte zu schließen.

14. Verbinder nach Anspruch 13, **dadurch gekennzeichnet, daß** eine der leitenden Flächen in einen ersten Abschnitt (20a) aufgespalten ist, der nicht an die Schaltung für das Wegende angeschlossen ist und einen zweiten Abschnitt (20), der an die Schaltung angeschlossen ist und daß einer der Füße (7) des Bürstenkontaktes (2a) relativ zur isolierenden Platte festliegt während der zweite Fuß (6) aufgrund des Verformungseffektes des Bürstenkontakts (2a), der durch die Chipkarte (1) provoziert wird, sich von dem ersten Abschnitt (20a) der gespaltenen Fläche zum zweiten Abschnitt (20) der Fläche bewegen kann.

15. Verbinder nach Anspruch 14, **dadurch gekennzeichnet, daß** die zwei Abschnitte (20, 20a) der gespaltenen leitenden Fläche durch einen Abschnitt (21) getrennt sind, der schräg zur Bewegungsrichtung des zweiten Fußes (6) des Bürstenkontaktes ist.

16. Verbinder nach einem der Ansprüche 12 bis 15, **dadurch gekennzeichnet, daß** der Bürstenkontakt (2a) für das Erfassen des Wegendes der Karte (1) auf einem Zweig (17) der Platte (3) liegt der relativ zur Achse der Karte verschoben ist.

17. Kartenleser mit einem Verbinder nach einem der Ansprüche 1 bis 16.

## Claims

1. Connector for smart card reader (1) comprising contacts (2) connected to an electronic circuit (10a) and designed, on placing the card (1) into the reader, to be connected to contact pads of the microcircuit of this card, this connector comprising a plate (3) made of electrically insulating material comprising cavities (4), each one freely accommodating a brush contact (2), one end (5) of which projects out of the cavity (4) and is designed to be put in contact with a contact pad of the microcircuit of the card (1) and the other end (6, 7) of which bears, with sliding, on a conducting pad (8, 9) of the electronic circuit formed on a printed circuit card (10) applied against the plate (3) made of electrically insulating material, **characterized in that** the brush contacts (2) have the form of a metal strip folded substantially in the shape of a V, the apex (5) of which constitutes the said first end and at least one of the feet (6, 7) of which constitutes the said second end.

2. Connector according to Claim 1, **characterized in that** the brush contacts (2) are engaged in cavities (4), the cross section of which exhibits, in the plane of the V of the brush contacts (2), a flared shape substantially complementary to that of the V of the brush contacts (2).

3. Connector according to either of Claims 1 and 2, **characterized in that** the brush contacts (2) are made of a metal having elastic properties.

4. Connector according to one of Claims 1 to 3, **characterized in that** the plane of the V of the brush contacts (2) is parallel to the direction in which the card (1) is inserted into the reader.

5. Connector according to one of Claims 1 to 4, **characterized in that** the first end (5) of the brush contacts projects into a slot (13) delimited by one (3a) of the faces of the plate (3) and the face (14a) of a card guide (14).

6. Connector according to Claim 5, **characterized in that** the card guide (14) is attached to the plate (3).

7. Connector according to Claim 5, **characterized in that** the card guide (14) is made as a single piece with the plate (3).

8. Connector according to one of Claims 1 to 7, **characterized in that** the feet (6, 7) of the V of the brush contacts (2) have a shape curved towards the plate (3).

9. Connector according to one of Claims 1 to 8, **characterized in that** the feet (6, 7) of the V are engaged in the housings (15, 16) of the plate (3) made between the latter and the printed circuit board (10).

10. Connector according to Claim 9, **characterized in that** one at least of these housings (15, 16) has a size such that the corresponding foot (6) may be moved on the contact pad (8, 9) of the printed circuit on deformation of the brush contact (2) caused by the insertion of the card (1).

11. Connector according to Claim 10, **characterized in that** one (7) of the feet of the brush contact (2) is locked in the corresponding housing (16).

12. Connector according to one of Claims 1 to 11, comprising at least one contact (2a) for detecting the end of travel on inserting the card (1) into the reader, this contact (2a) being connected to conducting pads of the electronic circuit, a cavity (4) freely accommodating this brush contact (2a), a first end (5) of which projects out of the cavity (4) and is intended to detect the end of travel of the card (1) and the other end of which (6, 7) bears on a conducting pad (19; 20, 20a) of the electronic circuit formed on the printed circuit card (10).

13. Connector according to Claim 12, **characterized in that**, when the smart card (1) is in the end-of-travel position on the plate (3), the card (1) bears on the apex (5) of the brush contact, and the feet (6, 7) of the latter bear on two conducting pads (19, 20) of the electronic circuit of the printed circuit card (10) thereby closing a circuit for detecting the end of travel of the card.

14. Connector according to Claim 13, **characterized in that** one of the said conducting pads is divided into a first part (20a) not connected to the end-of-travel detection circuit and a second part (20) connected to this circuit, **in that** one (7) of the feet of the brush contact (2a) is locked with respect to the insulating plate (3), while the second foot (6) may, owing to the effect of the deformation of the brush contact (2a) caused by the smart card (1), move from the first part (20a) of the divided pad to the second part (20) of the latter.

15. Connector according to Claim 14, **characterized in that** the two parts (20, 20a) of the divided conducting pad are separated by a gap (21) which is oblique with respect to the direction of movement of the said second foot (6) of the brush contact.

16. Connector according to one of Claims 12 to 15, **characterized in that** the brush contact (2a) for detecting the end of travel of the card (1) is located on a branch (17) of the plate (3) which is offset with respect to the axis of the latter.

17. Card reader comprising a connector according to one of Claims 1 to 16.
